Europäisches Patentamt

European Patent Office

Office européen des brevets

(11) Veröffentlichungsnummer: **0 109 546**
**B1**

(12) # EUROPÄISCHE PATENTSCHRIFT

(45) Veröffentlichungstag der Patentschrift:
26.11.86

(21) Anmeldenummer: 83110311.4

(22) Anmeldetag: 15.10.83

(51) Int. Cl.⁴: **C 08 K 5/05,** C 08 L 27/06,
C 07 C 31/24

(54) Costabilisator für Polyvinylchlorid.

(30) Priorität: 22.10.82 DE 3239086

(43) Veröffentlichungstag der Anmeldung:
30.05.84 Patentblatt 84/22

(45) Bekanntmachung des Hinweises auf die Patenterteilung:
26.11.86 Patentblatt 86/48

(84) Benannte Vertragsstaaten:
AT BE CH DE FR GB IT LI NL SE

(56) Entgegenhaltungen:
GB-A-2 020 660

P. PASCAL: "Nouveau traité de chemie minérale",
Teil VIII, 1963, Seiten 577-586, Masson et Cie, Paris,
FR

(73) Patentinhaber: Degussa Aktiengesellschaft,
Weissfrauenstrasse 9, D-6000 Frankfurt am Main
1 (DE)

(72) Erfinder: Werle, Peter, Dr., Im Börner 43, D-6460
Gelnhausen 2 (DE)
Erfinder: Merk, Wolfgang, Dr., 3-35- 19
denenchofu, ota- ku Tokyo 145 (JP)

## Beschreibung

Die Erfindung betrifft ein Verfahren zur Herstellung eines Costabilisators aus Pentaerythrit für die Stabilisierung von Polyvinylchlorid.

Polyvinylchlorid verfärbt sich unter der Einwirkung von Licht und insbesondere bei höheren Temperaturen, wie sie bei der Verformung und Verarbeitung des Polyvinylchlorids auftreten. Zur Minderung oder Vermeidung dieser Einflüsse werden dem Polyvinylchlorid Stabilisatoren zugefügt. In vielen Fällen ist es erforderlich, zur Verstärkung und Ergänzung der Wirkung der Stabilisatoren zusätzlich Costabilisatoren anzuwenden.

Es ist bekannt, Polyvinylchlorid als Stabilisator Metallsalze oder deren Gemische, unter anderen die Calcium-, Strontium-, Barium-, Zink-, Cadmium-, Zink- oder Bleisalze der Fettsäuren, und als Costabilisator organische Phosphite zuzusetzen (US-PS 2564646). Es ist such bekannt, als Stabilisator Gemische des Calcium- oder Zinkbenzoats mit Calcium- oder Zinksslzen der in natürlichen Ölen und Fetten vorliegenden Fettsäuregemische und als Costsbilisator Sorbit einzusetzen (US-PS 3004-00).

Als Stabilisator dienen auch Eisenverbindungen, wie Eisensulfat, und als Costabilisstor mehrwertige Alkohole, wie Pentaerythrit, Trimethylolpropan, Dipentaerythrit und Tripentaerythrit (US-PS 3142659). Nachteilig ist insbesondere bei der Verwendung der mehrwertigen Alkohole als Costsbilisator, daß sie sich in das Polyvinylchlorid nicht oder zumindest nicht ohne erhebliche Schwierigkeiten homogen einarbeiten lassen.

Es ist außerdem bekannt, als Stabilisator Metallsalze, namentlich Calcium- oder Zinkstearat oder deren Gemische, zu verwenden und als Costabilisator Gemische aus Pentaerythrit und Trimethylolpropan und gegebenenfalls anderen mehrwertigen Alkoholen, wie Dipentaerythrit, Tripentaerythrit, Neopentylglycol, Trimethyloläthan, Mannit, Sorbit oder Glycerin zuzufügen, die durch Zusammenschmelzen des Pentaerythrits mit diesen Substanzen und Pulverisieren der erstarrten Schmelze gewonnen werden (DE-OS 2356625). Der so bereitete Costabilisator läßt sich zwar ohne besondere Schwierigkeiten homogen in das Polyvinylchlorid einarbeiten, muß jedoch zur Erzielung einer genügenden Wirkung in verhältnismäßig großer Menge angewendet werden.

Aus der GB-A-2 020 600 ist ein Addukt aus Bleioxid und Pentaerythrit bekannt, das für die Stabilisierung von PVC vorgeschlagen wird.

Bleioxid und Pentaerythrit werden bevorzugt im molaren Verhältnis von 2:1 bei Temperaturen über 170°C miteinander umgesetzt, ohne daß jedoch eine Wasserabspaltung eintritt.

Es ist nun ein Verfahren zur Herstellung eines Costabilisators aus Pentaerythrit für die Stabilisierung von Polyvinylchlorid gefunden worden, das dadurch gekennzeichnet ist, daß Pentaerythrit bei Temperaturen etwa von 180 bis 220°C mit stark alkalisch wirkenden Substanzen unter Wasserabspaltung behandelt wird. Der so behandelte Pentaerythrit läßt sich nicht nur ohne Schwierigkeiten in Polyvinylchlorid homogen einarbeiten, sondern hat eine so günstige Wirkung, daß die Anwendung einer verhältnismäßig geringen Menge dieses Costabilisators genügt.

Der erfindungsgemäß behandelte Pentaerythrit eignet sich als Costabilisator in Mischung mit üblichen Stabilisatoren, beispielsweise Salzen aus mehrwertigen Metallen und Fettsäuren. Besonders zweckmäßig ist die Anwendung als Costabilisator mit denjenigen Stabilisatoren, die als nicht giftig gelten und daher in Polyvinylchlorid eingesetzt werden, das für die Verpackung von Lebensmitteln dienen soll. Diese Stabilisatoren sind vornehmlich die Magnesium-, Calcium- und Zinksalze der unverzweigten aliphatischen einwertigen Carbonsäuren mit 10 bis 24 Kohlenstoffatomen oder deren Gemische.

In welcher Menge der Costabilisator dem Polyvinylchlorid zugesetzt wird, richtet sich gegebenenfalls nach der Art und Menge des Stabilisators und nach dem gewünschten Stabilisierungsgrad. Zweckmäßigerweise soll das Polyvinylchlorid im allgemeinen etwa 0,1 bis 2,0 Gewichtsprozent des Costabilisators enthalten.

Erfindungsgemäß wird Pentaerythrit mit stark alkalisch wirkenden Substanzen behandelt. Vorteilhaft ist es, Pentaerythrit anzuwenden, der etwa 5 bis 20 Gewichtsprozent Dipentaerythrit enthält. Als stark alkalisch wirkende Substanzen dienen zweckmäßigerweise Metalloxide oder Metallhydroxide, vorzugsweise die Oxide oder Hydroxide der Alkali- oder Erdalkalimetalle, insbesondere Calciumoxid.

In welcher Menge die alkalisch wirkenden Substanzen angewendet werden, richtet sich gegebenenfalls nach der Art der Substanzen. Mit Vorteil werden, namentlich im Falle des Calciumoxids, 0,2 bis 2,0 Gewichtsteile, insbesondere 0,3 bis 1,0 Gewichtsteile, der alkalisch wirkenden Substanzen je 100 Gewichtsteile Pentaerythrit eingesetzt.

Die Behandlung des Pentaerythrits mit den alkalisch wirkenden Substanzen erfolgt zweckmäßigerweise bei Temperaturen etwa von 180 bis 220°C, vorzugsweise bei Temperaturen von 190 bis 210°C. Bei der Behandlung wird Wasser abgespalten. Die Behandlungsdauer richtet sich in gewissem Umfang nach der Behandlungstemperatur. Zweckmäßigerweise erfolgt die Behandlung so lange, bis je mol des eingesetzten Pentaerythrits 0,5 bis 2,0 mol Wasser, vorzugsweise 0,8 bis 1,2 mol Wasser, abgetrieben sind.

Der so behandelte Pentaerythrit erstarrt beim Abkühlen. Zu einem Pulver, vorzugsweise mit einer Korngröße von unter 0,1 mm, zerkleinert, ist er als Costabilisator für Polyvinylchlorid gebrauchsfertig.

**Beispiele**

A. Herstellung des Costabilisators

1. 1 kg handelsüblicher Pentaerythrit, der 12 Gewichtsprozent Dipentaerythrit enthielt und einen Schmelzbereich zwischen 230 und 240°C aufwies, wurde mit 8 g Calciumoxid vermischt. Die Mischung wurde auf 190°C erhitzt und während 60 Minuten auf dieser Temperatur gehalten; sie bildete währenddessen eine Schmelze und spaltete Wasser ab. Insgesamt wurden 80 g Wasser abgetrieben. Der so behandelte Pentaerythrit erstarrte beim Abkühlen. Er wurde gemahlen, so daß er zu 90% eine Korngröße unter 0,1 mm hatte. Das Produkt war farblos. Es sinterte bei 140°C und schmolz bei 150°C.

2. Es wurde wie nach Beispiel 1 verfahren, jedoch wurde die Mischung auf 207°C erhitzt. 215 g Wasser wurden abgetrieben. Das Produkt war nahezu farblos. Es sinterte bei 95°C und schmolz bei 110°C.

3. Es wurde wie nach Beispiel 1 verfahren, jedoch wurden 15 g Calciumoxid eingesetzt und es wurde die Mischung 60 Minuten auf 198°C gehalten. Abgetrieben wurden 150 g Wasser. Das Produkt war farblos. Es sinterte bei 120°C und schmolz bei 140°C.

4. Es wurde wie nach Beispiel 1 verfahren, jedoch wurden statt Calciumoxid 15 g Natriumhydroxid eingesetzt und es wurde die Mischung 40 Minuten auf 215°C gehalten. Abgetrieben wurden 82 g Wasser. Das Produkt war farblos. Es sinterte bei 145°C und schmolz bei 155°C.

B. Anwendung des Costabilisators

Es wurde ein handelsübliches Weich-Polyvinylchlorid mit der Bezeichnung Solvic 271 GB (dry blend type) K-Wert 72 verwendet. 70 Gewichtsteile dieses Polyvinylchlorids wurden mit 30 Gewichtsteilen Dioctylphthalat sowie mit 1,0 Gewichtsteilen Calciumstearat und 0,5 Gewichtsteilen Zinkstearat vermischt. Es wurden 4 derartige Mischungen hergestellt:

Mischung 1 verblieb ohne Costabilisator.

Mischung 2 wurde mit 0,5 Gewichtsteilen eines nach dem Verfahren gemäß der DE-OS 2 356 625 hergestellten Costabilisators versetzt (Handelsprodukt Polyol 400 Z der Firma Perstorp).

Mischung 3 wie Mischung 2, jedoch mit 1,0 Gewichtsteilen des Costabilisators versetzt.

Mischung 4 wurde mit 0,5 Gewichtsteilen des nach Beispiel A 1 hergestellten Produkts versetzt.

Die vier Mischungen wurden jeweils 10 Minuten lang bei 170°C bis 175°C auf einem Zweiwalzenstuhl bearbeitet und dann bei 130 bis 140°C und 200 bar zu Folien von 0,5 mm Stärke gepreßt. Die Folien waren farblos. Stücke dieser Folien wurden zur Prüfung auf ihre Wärmebeständigkeit 30 bis 90 Munten auf 180°C gehalten. Die Ergebnisse waren: Zeit Mischung (min)

1 2 3 4

30 gelb- gelb schwach schwach
braun gelb gelb

45 schwarz gelbbraun orange gelb
mit dunklen orange
Rändern
60 schwarz orange- gelbbraun gelb
braun mit mit dunklen braun
dunklen Rändern
Rändern
75 schwarz schwarz orange- gelbbraun
braun mit mit dunklen
dunklen Rändern
Rändern
90 schwarz schwarz fast gelbbraun
schwarz mit dunklen
Rändern-

**Patentansprüche**

1. Verfahren zur Herstellung eines Costabilisators aus Pentaerythrit für die Stabilisierung von Polyvinylchlorid, dadurch gekennzeichnet, daß Pentaerythrit bei Temperaturen etwa von 180 bis 220°C mit stark alkalisch wirkenden Substanzen unter Wasserabspaltung behandelt wird.

2. Verfahren nach Anspruch 1, dadurch gekennzeichnet, daß 0,2 bis 2,0 Gewichtsteile der alkalisch wirkenden Substanzen je 100 Gewichtsteile. Pentaerythrit eingesetzt werden.

3. Verfahren nach Anspruch 1 oder 2, dadurch gekennzeichnet, daß als alkalisch wirkende Substanz Calciumoxid verwendet wird.

4. Verfahren nach Anspruch 1 bis 3, dadurch gekennzeichnet, daß Pentaerythrit verwendet wird, der etwa 5 bis 20 Gewichtsprozent Dipentaerythrit enthält.

5. Verwendung des Costabilisators, hergestellt nach einem oder mehreren der Ansprüche 1 bis 4, für die Stabilisierung von Polyvinylchlorid.

**Claims**

1. A process for the production of a co-stabilizer composed of pentaerythritol for the stabilization of polyvinylchloride characterised in that pentaerythritol is treated at temperatures of from about 180 to 220°C with substances having a marked alkaline effect with elimination of water.

2. A process according to claim 1, characterised in that from 0.2 to 2.0 parts by weight of the substances having an alkaline effect are used for each 100 parts by weight of pentaerythritol.

3. A process according to claim 1 or 2, characterised in that calcium oxide is used as substance having an alkaline effect.

4. A process according to claims 1 to 3, characterised in that pentaerythritol containing from about 5 to 20% by weight of dipentaerythritol is used.

5. Use of the co-stabilizer produced according to one or more of claims 1 to 4 for the stabilization of polyvinylchloride.

**Revendications**

1°) Procédé pour la fabrication d'un co-stabilisant à partir de la pentaérythrite pour la stabilisation de chlorure de polyvinyle, caractérisé en ce que la pentaérythrite est traitée à des températures d'environ 18O à 220°C avec des substances ayant un effet fortement alcalin, avec séparation d'eau.

2°) Procédé suivant la revendication 1, caractérisé en ce qu'il est mis en oeuvre 0,2 à 2 % en poids de substances ayant une action alcaline pour 100 parties en poids de pentaérythrite.

3°) Procédé suivant la revendication 1 ou 2, caractérise en ce que, comme substances ayant une action alcaline, il est utilisé l'oxyde de calcium.

4°) Procédé suivant les revendications 1 à 3, caractérisé en ce qu'il est utilisé une pentaérythrite qui contient 5 à 20 % en poids environ de dipentaérythrite.

5°) Utilisation du co-stabilisant, fabriqué suivant une ou plusieurs des revendications 1 à 4, pour la stabilisation du chlorure de polyvinyle.